(19) Europäisches Patentamt / European Patent Office / Office européen des brevets

(11) **EP 4 156 585 A1**

(12) **EUROPEAN PATENT APPLICATION**
published in accordance with Art. 153(4) EPC

(43) Date of publication:
**29.03.2023 Bulletin 2023/13**

(21) Application number: **20948263.7**

(22) Date of filing: **07.08.2020**

(51) International Patent Classification (IPC):
***H04L 5/00*** (2006.01)

(52) Cooperative Patent Classification (CPC):
**H04L 5/00**

(86) International application number:
**PCT/CN2020/108005**

(87) International publication number:
**WO 2022/027683 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
- **CHEN, Wenhong**
  **Dongguan, Guangdong 523860 (CN)**
- **SHI, Zhihua**
  **Dongguan, Guangdong 523860 (CN)**

(74) Representative: **Manitz Finsterwald**
**Patent- und Rechtsanwaltspartnerschaft mbB**
**Martin-Greif-Strasse 1**
**80336 München (DE)**

(54) **METHOD FOR DETERMINING ANTENNA PANEL FOR TRANSMISSION, AND TERMINAL DEVICE**

(57) Embodiments of the present application relate to a method for determining an antenna panel for transmission, and a terminal device. The method comprises: according to at least one of spatial information of an uplink channel, a redundancy version of the uplink channel, and a predefined antenna panel mapping rule, a terminal device determining an antenna panel used for each repeated transmission in multiple repeated transmissions of the uplink channel, wherein at least two repeated transmissions in the multiple repeated transmissions use different antenna panels; and the terminal device performing, on the determined antenna panel, multiple repeated transmissions of the uplink channel. According to the embodiments of the present application, an antenna panel used by a terminal device for each repeated transmission can be determined, and at least two repeated transmissions use different antenna panels, so as to obtain a diversity gain.

FIG. 2

EP 4 156 585 A1

**Description**

TECHNICAL FIELD

The present disclosure relates to the communication field, and more particularly, to a method for determining a panel used for transmission and a terminal device.

BACKGROUND

A terminal device may have multiple panels for uplink transmission. A panel includes a group of physical antennas with a small spacing, there is a large spacing between different panels, and each panel has an independent radio frequency channel.

In order to improve transmission reliability of an uplink channel, the New Radio (NR) technology introduces retransmission of the uplink channel. Taking retransmission of a Physical Uplink Shared Channel (PUSCH) as an example, PUSCHs carrying the same data are transmitted multiple times through different resources/antennas/ redundancy versions, so as to obtain diversity gain and reduce a detection error rate (such as, a block error rate (BLER)). Specifically, the retransmission may be performed in multiple slots or over multiple panels. For the retransmission of the multiple panels, the terminal device transmits PUSCHs carrying the same data over different panels simultaneously. Methods for the retransmission of a Physical uplink control channel (PUCCH) and PUSCH are the same.

When the terminal device does not support that uplink signals are transmitted by the multiple panels simultaneously, multiple retransmissions of the PUSCH/PUCCH cannot be performed simultaneously by the multiple panels. Since the terminal only uses one panel for transmission at the same time, it is necessary to use different panels to transmit signals on different time domain resources to obtain the diversity gain. In such case, how to determine a panel used for each retransmission of the uplink channel is a problem to be solved.

SUMMARY

Embodiments of the present disclosure provide a method for determining a panel used for transmission and a terminal device, which can determine the panel used for each retransmission of the uplink channel.

The embodiments of the present disclosure provide a method for determining a panel used for transmission, which includes the following operations.

A terminal device determines, according to at least one of spatial information of an uplink channel, a redundancy version of the uplink channel or a predefined panel mapping rule, a panel used for each retransmission in multiple retransmissions of the uplink channel. At least two retransmissions in the multiple retransmissions use different panels.

The terminal device performs the multiple retransmissions of the uplink channel over the determined panels.

The embodiments of the present disclosure also provide a terminal device, which includes a determination module and a transmission module.

The determination module is configured to determine, according to at least one of spatial information of an uplink channel, a redundancy version of the uplink channel or a predefined panel mapping rule, a panel used for each retransmission in multiple retransmissions of the uplink channel. At least two retransmissions in the multiple retransmissions use different panels.

The transmission module is configured to perform the multiple retransmissions of the uplink channel over the determined panels.

The embodiments of the present disclosure provide a terminal device, which includes a processor and a memory. The memory is configured to store a computer program, and the processor is configured to call and run the computer program stored in the memory to execute the method as described in any one of the above embodiments.

The embodiments of the present disclosure provide a chip, which includes a processor. The processor is configured to call a computer program from a memory and run the computer program, to cause a device mounted with the chip to execute the method as described in any one of the above embodiments.

The embodiments of the present disclosure provide a computer readable storage medium. The computer readable storage medium is configured to store a computer program that causes a computer to execute the method as described in any one of the above embodiments.

The embodiments of the present disclosure provide a computer program product. The computer program product includes one or more computer program instructions that cause a computer to execute the method as described in any one of the above embodiments.

The embodiments of the present disclosure provide a computer program, which causes a computer to execute the method as described in any one of the above embodiments.

According to the embodiments of the present disclosure, a terminal device determines a panel used for each retransmission according to at least one of spatial information of an uplink channel, a redundancy version of the uplink channel or a predefined panel mapping rule, and at least two retransmissions use different panels, thereby obtaining the diversity gain.

BRIEF DESCRIPTION OF THE DRAWINGS

FIG. 1 is a schematic diagram of an application scenario of an embodiment of the present disclosure.

FIG. 2 is an implementation flowchart of a method 200 for determining a panel used for transmission according to an embodiment of the present disclosure.

FIG. 3 is a schematic diagram of determining a panel based on a panel ID in a transmission configuration indication (TCI) state in a first embodiment of the present disclosure.

FIG. 4 is a schematic diagram of determining a panel based on sounding reference signal (SRS) resource set indication information in a TCI state in a second embodiment of the present disclosure.

FIG. 5 is a schematic diagram of determining a panel based on a TCI state group including a TCI state in a third embodiment of the present disclosure.

FIG. 6 is a schematic diagram of a panel mapping manner according to an embodiment of the present disclosure.

FIG. 7 is a schematic diagram of another panel mapping manner according to an embodiment of the present disclosure.

FIG. 8 is a schematic structural diagram of a terminal device 800 according to an embodiment of the present disclosure.

FIG. 9 is a schematic structural diagram of a terminal device 900 according to an embodiment of the present disclosure.

FIG. 10 is a schematic structural diagram of a communication device 1000 according to an embodiment of the present disclosure.

FIG. 11 is a schematic structural diagram of a chip 1100 according to an embodiment of the present disclosure.

DETAILED DESCRIPTION

The technical solutions in the embodiments of the present disclosure will be described below with reference to the accompanying drawings in the embodiments of the present disclosure.

It is to be noted that the terms "first", "second" and the like in the specification and claims of the embodiments of the present disclosure and the above accompanying drawings are used to distinguish similar objects, and unnecessary to be used to describe a specific sequence or order. The objects described by "first" and "second" may be the same or different.

The technical solutions of the embodiments of the present disclosure may be applied to various communication systems, such as a Global System of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of the NR system, a LTE-based access to unlicensed spectrum (LTE-U) system, a NR-based access to unlicensed spectrum (NR-U) system, an Universal Mobile Telecommunications System (UMTS), a Wireless Local Area Networks (WLAN), a Wireless Fidelity (WiFi), a 5th-Generation (5G) system or other communication systems.

Generally speaking, conventional communication systems support a limited number of connections and are easy to implement. However, with the development of communication technology, mobile communication systems will not only support conventional communications, but also support communications, such as, Device to Device (D2D) communication, Machine to Machine (M2M) communication, Machine Type Communication (MTC), Vehicle to Vehicle (V2V) communication and the like. The embodiments of the present disclosure may also be applied to these communication systems.

In one example, the communication system in the embodiments of the present disclosure may be applied to a Carrier Aggregation (CA) scenario, a Dual Connectivity (DC) scenario, and a Standalone (SA) networking scenario.

The embodiments of the present disclosure are not limited to the spectrum of the application. For example, the embodiments of the present disclosure may be applied to the licensed spectrum, and may also be applied to the unlicensed spectrum.

The embodiments of the present disclosure describe each embodiment with reference to a network device and a terminal device. The terminal device may also be referred to as a User Equipment (UE), an access terminal, a subscriber unit, a subscriber station, a mobile station, a mobile platform, a remote station, a remote terminal, a mobile device, a user terminal, a terminal, a wireless communication device, a user agent or a user device and the like. The terminal device may be a STAION (ST) in the WLAN, which may be a cellular phone, a cordless phone, a Session Initiation Protocol (SIP) phone, a Wireless Local Loop (WLL) station, a Personal Digital Assistant (PDA) device, a handheld device with a wireless communication function, a computing device or other processing device connected to a wireless modem, a vehicle-mounted device, a wearable device, and a terminal device in next generation communication systems, such as a terminal device in an NR network, a terminal device in a future evolved Public Land Mobile Network (PLMN) network or the like.

It is exemplary but unlimited that, in the embodiments of the present disclosure, the terminal device may also be a wearable device. The wearable device may also be called a wearable intelligent device, which is generic term of a wearable device developed by applying wearable technology to intelligently design daily wear, such as glasses, gloves, watches, clothing and shoes. The wearable device is a portable device that is worn on the body directly or integrated into user's clothes or accessories. The wearable device is not only a hardware device, but also a powerful function realized through software support, data interaction and cloud interaction. A generalized wearable intelligent device includes full-featured, large size and complete or partial functions realized without relying on smart phones, such as smart watches or smart glasses, and includes only a certain application function, which is necessary to be used in conjunction with other devices such as a smart phone, such as various smart bracelets for monitoring physical signs, or smart jewelry and the like.

The network device may be a device communicating with a mobile device. The network device may be an Access Point (AP) in the WLAN, a Base Transceiver Station (BTS) in the GSM or the CDMA, a NodeB (NB) in the WCDMA, an Evolved Node B (eNB or eNodeB) in the LTE, a relay station or an access point, a vehicle-mounted device, a wearable device, a network device in a NR network (gNB), a network device in the future evolved PLMN network or the like.

In the embodiments of the present disclosure, the network device provides services for a cell, and the terminal device communicates with the network device through transmission resources used by the cell (such as, frequency domain resources or spectrum resources). The cell may be a cell corresponding to the network device (such as, a base station), and the cell may belong to a macro base station or a base station corresponding to a small cell. The small cell here may include a metro cell, a micro cell, a pico cell, or a femto cell and the like. These small cells have characteristics of small coverage and low transmission power, which are suitable for providing high-speed data transmission services.

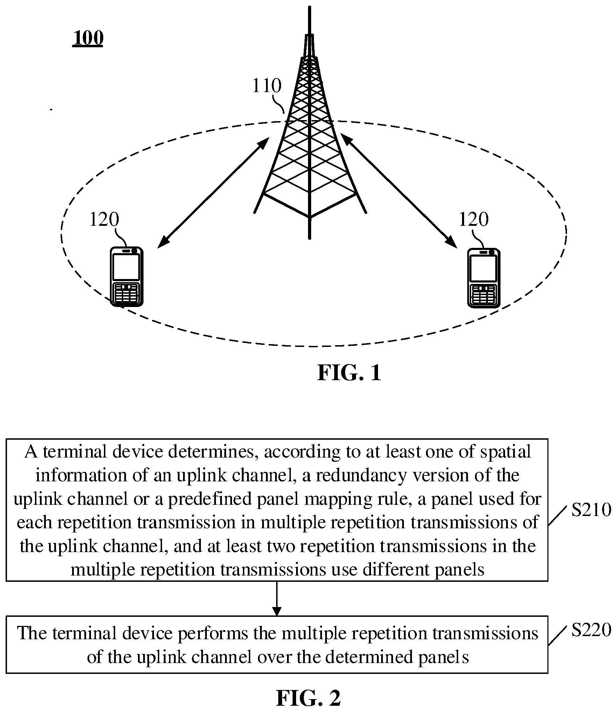

FIG. 1 exemplarily illustrates one network device 110 and two terminal devices 120. In one example, the communication system 100 may include multiple network devices 110 and another number of terminal devices 120 may be included within the coverage of each network device 110, which is not limited in the embodiments of the present disclosure. The embodiments of the present disclosure may be applied to one terminal device 120 and one network device 110, and may also be applied to one terminal device 120 and another terminal device 120.

In one example, the communication system 100 may also include another network entity such as a mobility management entity (MME), an access and mobility management function (AMF) and the like, which is not limited in the embodiments of the present disclosure.

It is to be understood that terms "system" and "network" herein may usually be exchanged. The term "and/or" herein is only an association relationship describing associated objects and represents that three relationships may exist. For example, A and/or B may represent three conditions: i.e., independent existence of A, existence of both A and B and independent existence of B. In addition, character "/" in the disclosure usually represents that previous and next associated objects form an "or" relationship.

The embodiments of the present disclosure provide a method for determining a panel used for transmission. When the terminal that does not support the simultaneous transmissions by the multiple panels performs the PUSCH/PUCCH retransmission, panels used for different retransmissions may be determined according to the method provided in the embodiments of the present disclosure, in which at least two retransmissions use different panels. Therefore, the problem that uplink transmission performance deterioration caused by a part of panels being occluded is avoided, and the diversity transmission gain of the PUCCH/PUSCH may be improved, thereby meeting transmission requirements of Ultra-reliable and Low Latency Communications (URLLC).

FIG. 2 is an implementation flowchart of a method 200 for determining a panel used for transmission according to an embodiment of the present disclosure. In one example, the method may be applicable to the system illustrated in FIG. 1, but is not limited thereto. The method includes at least part of the following operations.

In S210, a terminal device determines, according to at least one of spatial information of an uplink channel, a redundancy version of the uplink channel or a predefined panel mapping rule, a panel used for each retransmission in multiple retransmissions of the uplink channel.

At least two retransmissions in the multiple retransmissions use different panels.

In S220, the terminal device performs the multiple retransmissions of the uplink channel over the determined panels.

The spatial information of the uplink channel may be a transmission configuration indication (TCI) state, spatial relation information, or SRS resource indicator (SRI) indication information (a beam used by a sounding reference signal (SRS) resource indicated by the information is determined by the terminal as a transmission beam of the uplink channel). The spatial information of the uplink channel may be indicated by scheduling downlink control information (DCI) of the uplink channel, or indicated by high layer signaling.

There are at least three manners for the terminal device to determine the panel used for each retransmission according to the spatial information of the uplink channel.

In the first manner, the terminal device determines the panel used for each retransmission according to at least one of a panel identifier (Panel ID) or SRS resource set indication information in the spatial information of the uplink channel.

In the second manner, the terminal device determines the panel used for each retransmission according to a spatial information group including the spatial information of the uplink channel.

In the third manner, the terminal device determines the panel used for each retransmission according to the number of the spatial information of the uplink channel.

The above three manners are described below.

The first manner

For example, the spatial information of the uplink channel includes a plurality of spatial information.

According to a panel ID and/or SRS resource set indication information in the first spatial information corresponding to each retransmission, the terminal device determines the panel used for the retransmission. The first spatial information is one of the plurality of spatial information.

Specific to the manner of determining the panel based on the SRS resource set indication information, in one example, for each retransmission, the terminal device determines a panel used for a first SRS resource set as the panel used for the retransmission. The first SRS resource set is an SRS resource set indicated by SRS resource set indication information in the spatial information corresponding to the retransmission.

Taking the PUSCH as an example, in the embodiments of the present disclosure, the spatial information is used to determine a transmission beam of the PUSCH. For example, the spatial information may be a TCI state, spatial relation information, or SRI indication information (a beam used by the SRS resource indicated by the information is determined by the terminal as the transmission beam of the PUSCH). The spatial information may be indicated by scheduling DCI of the PUSCH, or indicated by high layer signaling.

Before determining the panel used for each retransmission, the terminal device may report the number of panels configured or currently activated to the network, and the network device may configure corresponding panel ID or SRS resource set according to the reported capability of the terminal. In addition, the network device may also configure the number of the retransmissions of the PUSCH and physical resources used for the retransmissions through the high layer signaling or the DCI.

The present manner is described below by two embodiments.

First embodiment

By taking the uplink channel being the PUSCH and the spatial information of the uplink channel being the TCI state as an example, the present embodiment describes a specific implementation for determining a panel based on a panel ID in the spatial information of the uplink channel.

The spatial information of the PUSCH is a plurality of spatial information. The following is described by taking the spatial information being N TCI states as an example (N is greater than 1). Each TCI state includes one panel ID, and panel IDs in different TCI states may be the same or different. Each PUSCH retransmission uses one of the N TCI states, and the terminal determines the panel used for a retransmission according to the panel ID in the TCI state used for the retransmission.

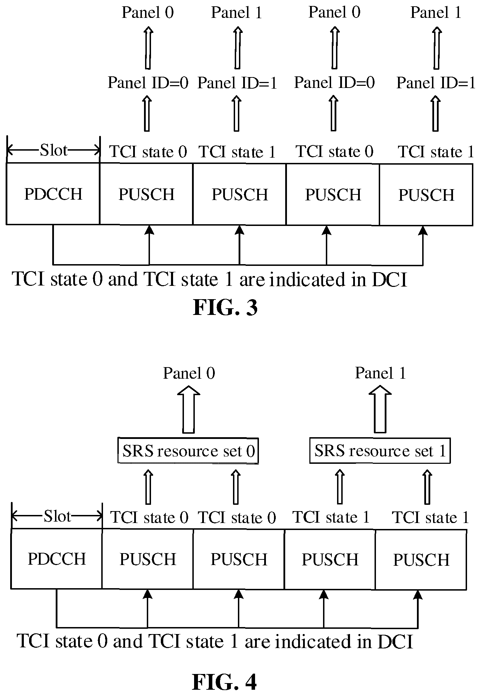

FIG. 3 is a schematic diagram of determining a panel based on a panel ID in a TCI state in the first embodiment of the present disclosure. As illustrated in FIG. 3, for a terminal with two activated panels (Panel 0 and Panel 1), the network side schedules K (K=4) PUSCH retransmissions through the DCI and indicates N (N=2) TCI states in the DCI. TCI state 0 (including the Panel ID having a value of 0) is used for the first and third transmissions, and TCI state 1 (including the Panel ID having a value of 1) is used for the second and fourth transmissions. According to the panel ID in the TCI state used for each transmission, the terminal determines whether the panel used for the retransmission is Panel 0 or Panel 1. The TCI state also includes information for determining a transmission beam of the PUSCH, such as, a reference signal for determining the transmission beam.

Second embodiment

By taking the uplink channel being the PUSCH and the spatial information of the uplink channel being the TCI state as an example, the embodiment describes a specific implementation for determining a panel based on SRS resource set indication information in the spatial information of the uplink channel.

The spatial information of the PUSCH is a plurality of spatial information. The following is described by taking the spatial information being N TCI states as an example (N is greater than 1). Each TCI state includes one SRS resource set indication information, and the SRS resource sets indicated by the SRS resource set indication information in different TCI states may be the same or different. Each PUSCH retransmission uses one of the N TCI states, and the terminal determines the panel used for a retransmission according to the SRS resource set indication information in the TCI state used for the retransmission.

In an implementation, the network device may preconfigure an SRS resource set for each panel for beam management over the panel, that is, a respective SRS resource set is transmitted over each panel. The terminal determines a panel for transmitting a first SRS resource set (or an SRS on the first SRS resource set) as the panel used for one PUSCH retransmission, and the first SRS resource set is an SRS resource set indicated by the SRS resource set indication information in the TCI state used for the retransmission.

In an implementation, the SRS resource set may include one or more SRS resources. When the SRS resource set includes only one SRS resource, the SRS resource set indication information may also be referred to as SRS resource indication information.

FIG. 4 is a schematic diagram of determining a panel based on SRS resource set indication information in a TCI state in second embodiment of the present disclosure. As illustrated in FIG. 4, for a terminal with two activated panels (Panel 0 and Panel 1), the network side schedules K (K=4) PUSCH retransmissions through the DCI and indicates N (N=2) TCI states in the DCI. TCI state 0 (the included SRS resource set indication information indicates SRS resource set 0, which is transmitted over Panel 0) is used for the first and second transmissions, and TCI state 1 (the included SRS resource set indication information indicates SRS resource set 1, which is transmitted over Panel 1) is used for the third and fourth transmissions. According to the SRS resource set indication information in the TCI state used for each transmission, the terminal determines whether the panel used for the retransmission is Panel 0 or Panel 1. When the SRS resource set indication information indicates the SRS resource set 0, the retransmission is performed by using Panel 0 that transmits the SRS resource set 0; and when the SRS resource set indication information indicates the SRS resource set 1, the retransmission is performed by using Panel 1 that transmits the SRS resource set 1.

The above first and second embodiments describe two examples of the first manner, and the second manner will continue to be described below.

The second manner

The terminal device determines the panel used for each retransmission of the uplink channel according to a spatial information group including the spatial information of the uplink channel.

In one example, the spatial information of the uplink channel includes a plurality of spatial information.

According to a spatial information group including the first spatial information corresponding to each retransmission, the terminal device determines the panel used for the retransmission. The first spatial information is one of the plurality of spatial information.

Taking the PUSCH being the uplink channel as an example, in an implementation, the terminal device receives multiple spatial information groups preconfigured by the network device, and each of the spatial information groups is used for indicating spatial information for the PUSCH transmission over a panel. For example, for a terminal device configured with two panels, the network device may preconfigure two spatial information groups by high layer signaling, in which the first spatial information group includes a set of spatial information (e.g., a set of TCI states or a set of SRI values) used for the PUSCH transmission over Panel 0, and the second spatial information group includes another set of spatial information (e.g., a set of TCI states or a set of SRI values) used for the PUSCH transmission over Panel 1.

Specifically, the spatial information of the PUSCH is N spatial information (N is greater than 1), and the N spatial information is from multiple spatial information groups. Each PUSCH retransmission uses one of the N spatial information, and the terminal determines the panel used for a retransmission according to a spatial information group including the spatial information used for the retransmission.

In an implementation, the N spatial information is from different spatial information groups. For example, the network device preconfigures N spatial information groups, and the N spatial information is from the different spatial information groups, respectively.

In another implementation, each spatial information may include a spatial information group index, and the spatial information with the same group index belongs to the same spatial information group and corresponds to the same panel. For example, each TCI state may be configured with a TCI state group index. When the number of panels configured or activated by the terminal is K, the value range of the group index may be {0, 1, ..., K-1}. For spatial information without a group index, the terminal may consider that the value of the group index is 0. Specifically, according to a spatial information group index in the spatial information corresponding to each retransmission, the terminal determines the panel used for the retransmission. In such manner, the network device may flexibly configure the grouping of spatial information to support different numbers of panels.

The present manner is described below by one embodiment.

Third embodiment

By taking the uplink channel being the PUSCH and the spatial information of the uplink channel being the TCI state as an example, the present embodiment describes a specific implementation for determining a panel based on a spatial information group including the spatial information of the uplink channel.

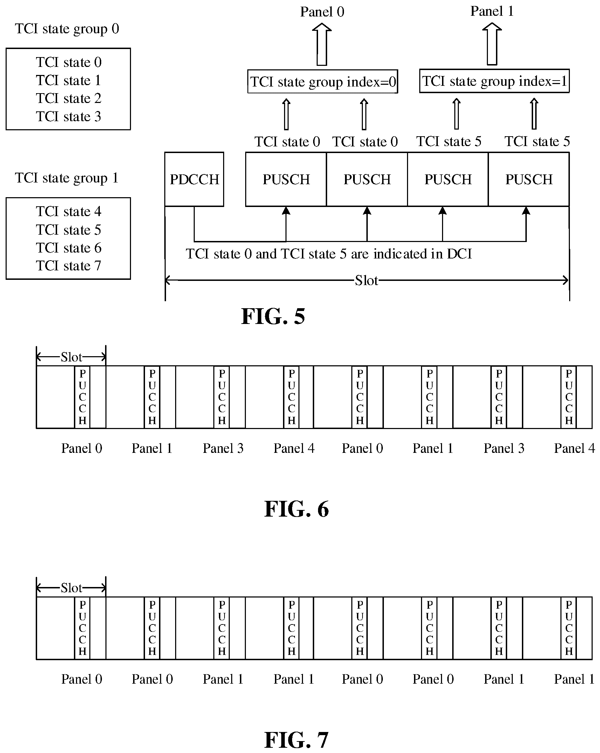

FIG. 5 is a schematic diagram of determining a panel based on a TCI state group including a TCI state in the third embodiment of the present disclosure. As illustrated in FIG. 5, the network device preconfigures two TCI state groups, in which a first TCI state group includes four TCI states and a configured TCI state group index is 0 for transmission over Panel 0, and a second TCI state group includes other four TCI states and a configured TCI state group index is 1 for transmission over Panel 1. In a case where the group index value of the TCI state used for the present PUSCH retransmission is 0, that is, the TCI state is included in the first TCI state group, the terminal may use the Panel 0 to perform the present retransmission. In a case where the group index value of the TCI state used for the present PUSCH retransmission is 1, that is, the TCI state is included in the second TCI state group, the terminal may use the Panel 1 to perform the present retransmission. Therefore, the terminal may determine the panel to be used according to the group index of the TCI state used for each transmission.

The above describes an example of the second manner, and the third manner will continue to be described below.

The third manner

The terminal device determines the panel used for each retransmission according to the number of spatial information of the uplink channel. For example, in a case where the number of the spatial information of the uplink channel is 1, the terminal device determines to perform the multiple retransmissions of the uplink channel by using the same panel. In a case where the number of the spatial information of the uplink channel is N (N is greater than 1), the terminal device determines to perform the multiple retransmissions of the uplink channel over N panels, respectively.

The above describes three manners for the terminal device to determine the panel according to the spatial information of the uplink channel, and the terminal device may also determine the panel used for each retransmission according to the redundancy version of the uplink channel. In one example, the terminal device determines to perform retransmissions corresponding to the same group of redundancy versions by using the same panel, and perform retransmissions corresponding to different groups of redundancy versions by using different panels.

Taking the PUSCH as an example, it is assumed that the number of PUSCH retransmissions is M=4, and the redundancy versions used for each retransmission are {0, 3, 0, 3}, where {0, 3} is a group of configured redundancy versions (for example, redundancy versions corresponding to one TCI state/SRI may be defined as a group of redundancy versions, and redundancy versions corresponding to another TCI state/SRI may be defined as another group of redundancy versions). The terminal may determine that the previous two retransmissions (the same group of redundancy versions) are performed by using Panel 0 (the same panel) and the last two retransmissions (the panels are different since the group of redundancy versions different from the previous two retransmissions is used) are performed by using Panel 1. In a case where the redundancy versions used for each retransmission are {0, 0, 2, 2}, the terminal may determine to perform the first and third retransmissions (the same group of redundancy versions) by using Panel 0 (the same panel), and determine to perform the second and fourth retransmissions (the panels are different since the group of redundancy versions different from the first and third retransmissions is used) by using Panel 1. In such manner, the panel used for each retransmission may be determined without additional signaling overhead.

The terminal device may also determine the panel used for each retransmission according to a predefined panel mapping rule. Taking the PUCCH as an example, in an implementation, the m-th PUCCH retransmission is performed by using the K-th panel of the terminal device. k=[(m-1)mod K]+1, where K is the number of panels configured and/or activated by the terminal device. It is assumed that the number of retransmissions is M=8 and the number of panels is K=4. FIG. 6 illustrates a panel mapping manner, which may be considered as a panel mapping manner in a polling mode.

In an implementation, the m-th PUCCH retransmission is performed by using the K-th panel of the terminal device. k=[(m/K-1)mod K]+1, where K is the number of panels configured and/or activated by the terminal device. It is assumed that the number of retransmissions is M=8 and the number of panels is K=2. FIG. 7 illustrates a panel mapping manner, which may be considered as a panel mapping manner in continuous mapping.

The above describes several manners for the terminal device to determine the panels used for multiple retransmissions. After the determination, the terminal device may perform multiple retransmissions of the uplink channel over the determined panels. The uplink channel includes the PUSCH or the PUCCH; and the above examples are suitable for both the PUSCH and the PUCCH.

In one example, the multiple retransmissions of the uplink channel occupy different slots or different orthogonal frequency division multiplexing (OFDM) symbols.

According to the embodiments of the present disclosure, when the terminal device does not support simultaneous transmissions of the uplink signals over the multiple panels, the terminal device may transmit the uplink signals to different transmission/reception points (TRPs) through different time domain resources by using different panels, thereby obtaining diversity gains in time domain and in space and improving the reliability of uplink channel transmission. Based on the method provided by the embodiments of the present disclosure, the network device may flexibly configure the panel used for each retransmission, thereby achieving the maximum diversity effect. Meanwhile, use of the preset mapping rule may also avoid additional signaling overhead.

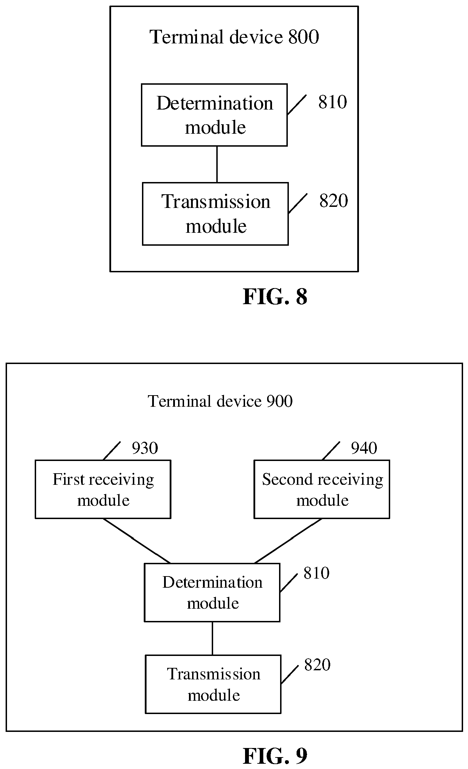

The embodiments of the present disclosure also provide a terminal device. FIG. 8 is a schematic structural diagram of a terminal device 800 according to an embodiment of the present disclosure, which includes a determination module 810 and a transmission module 820.

The determination module 810 is configured to determine a panel used for each retransmission in multiple retransmissions of an uplink channel according to at least one of spatial information of the uplink channel, a redundancy version of the uplink channel or a predefined panel mapping rule. At least two retransmissions in the multiple retransmissions use different panels.

The transmission module 820 is configured to perform the multiple retransmissions of the uplink channel over the determined panels.

In one example, the determination module 810 is configured to determine the panel used for each retransmission according to at least one of a panel identifier or sounding reference signal (SRS) resource set indication information in the spatial information of the uplink channel.

In one example, the spatial information of the uplink channel includes multiple spatial information.

In one example, the determination module 810 is configured to determine the panel used for each retransmission according to at least one of a panel identifier or SRS resource set indication information in first spatial information corresponding to the retransmission. The first spatial information is one of the multiple spatial information.

In one example, the determination module 810 is configured to determine, for each retransmission, a panel used for a first SRS resource set as the panel used for the retransmission. The first SRS resource set is an SRS resource set indicated by SRS resource set indication information in spatial information corresponding to the retransmission.

In one example, the determination module 810 is configured to determine the panel used for each retransmission according to a spatial information group including the spatial information of the uplink channel.

In one example, the spatial information of the uplink channel includes multiple spatial information.

In one example, the determination module 810 is configured to determine the panel used for each retransmission according to a spatial information group including first spatial information corresponding to the retransmission. The first spatial information is one of the plurality of spatial information.

In one example, as illustrated in FIG. 9, the terminal device further includes a first receiving module 930.

The first receiving module 930 is configured to receive multiple preset spatial information groups. Each of the spatial information groups is used for indicating the spatial information of the uplink channel on a panel.

In one example, the determination module 810 is configured to determine a panel corresponding to the spatial information group including the spatial information of the uplink channel as the panel used for the retransmission.

In one example, the multiple spatial information includes spatial information belonging to different spatial information groups.

In one example, as illustrated in FIG. 9, the terminal device further includes a second receiving module 940.

The second receiving module 940 is configured to receive each spatial information group index of the spatial information of the uplink channel. Each spatial information group index corresponds to a panel.

In one example, the determination module 810 is configured to determine the panel used for each retransmission according to a group index of the spatial information corresponding to the retransmission.

In one example, the determination module 810 is configured to determine the panel used for each retransmission according to a number of the spatial information of the uplink channel.

In one example, in a case where the number of the spatial information of the uplink channel is N, the determination module is configured to determine to perform each retransmission of the uplink channel on N panels respectively. N is a positive integer.

In one example, the spatial information of the uplink channel includes information for determining a transmission beam of the uplink channel.

In one example, the spatial information of the uplink channel includes at least one of the following: a transmission configuration indication (TCI) state, spatial relation information, or SRS resource indicator (SRI) indication information.

In one example, the spatial information of the uplink channel is indicated by scheduling downlink control information (DCI) the uplink channel or indicated by high layer signaling.

In one example, the determination module 810 is configured to determine to perform retransmissions corresponding to a same set of redundancy versions by using a same panel, and perform retransmissions corresponding to different sets of redundancy versions by using different panels.

In one example, the determination module 810 is configured to determine to perform the m-th retransmission of the uplink channel by using the k-th panel of the terminal device.

Where

$$k=[(m-1)\bmod K]+1; \text{ or } k=[(\lceil m/K \rceil-1)\bmod K]+1.$$

K is a number of panels configured and/or activated by the terminal device.

k and m are positive integers.

In one example, the multiple retransmissions of the uplink channel occupy different slots or different OFDM symbols.

In one example, the uplink channel includes a PUSCH or a PUCCH. A receiving module 510 is configured to receive configuration information. The configuration information indicates M sets of SRS resource groups, each set of SRS resource groups includes at least one SRS resource group, and M is a positive integer.

It is to be understood that the above and other operations and/or functions of the modules in the terminal device according to the embodiments of the present disclosure are intended to implement the corresponding flow of the terminal device in the method 200 of FIG. 2, which will not be elaborated herein for brief description.

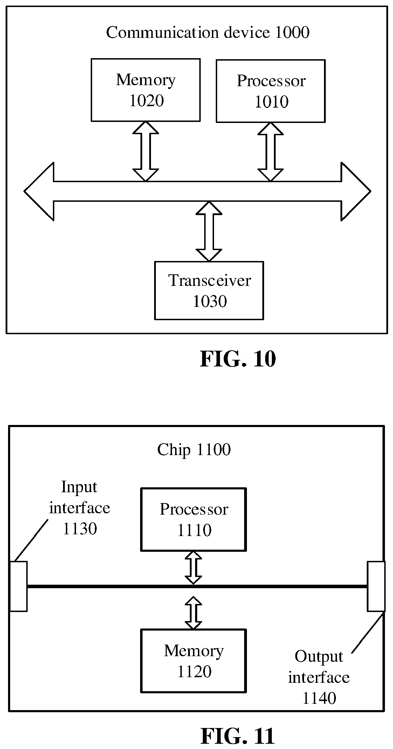

FIG. 10 is a schematic structural diagram of a communication device 1000 according to an embodiment of the present disclosure. The communication device 1000 illustrated in FIG. 10 includes a processor 1010. The processor 1010 may call a computer program from a memory and run the computer program to perform the methods in the embodiments of the present disclosure.

In one example, as illustrated in FIG. 10, the communication device 1000 may also include a memory 1020. The processor 1010 may call a computer program from the memory 1020 and run the computer program to perform the methods in the embodiments of the present disclosure.

The memory 1020 may be a separate device from the processor 1010, or may be integrated into the processor 1010.

In one example, as illustrated in FIG. 10, the communication device 1000 may also include a transceiver 1030. The processor 1010 may control the transceiver 1030 to communicate with another device, specifically, to transmit information or data to another device, or receive information or data from another device.

The transceiver 1030 may include a transmitter and a receiver. The transceiver 1030 may further include one or more antennas.

In one example, the communication device 1000 may be the terminal device in the embodiments of the present disclosure. The communication device 1000 may implement a corresponding process implemented by the terminal device in each method of the embodiments of the present disclosure, which will not be elaborated herein for brief description.

FIG. 11 is a schematic structural diagram of a chip 1100 according to an embodiment of the present disclosure. The chip 1100 illustrated in FIG. 11 includes a processor 1110. The processor 1110 may call a computer program from a memory and run the computer program to perform the methods in the embodiments of the present disclosure.

In one example, as illustrated in FIG. 11, the chip 1100 may also include a memory 1120. The processor 1110 may call a computer program from the memory 1120 and run the computer program to perform the methods in the embodiments of the present disclosure.

The memory 1120 may be a separate device from the processor 1110, or may be integrated in the processor 1110.

In one example, the chip 1100 may also include an input interface 1130. The processor 1110 may control the input interface 1130 to communicate with another device or chip, and specifically, may acquire information or data transmitted by another device or chip.

In one example, the chip 1100 may also include an output interface 1140. The processor 1110 may control the output interface 1140 to communicate with another device or chip, and specifically, may output information or data to another device or chip.

In one example, the chip may be applied to the terminal device in the embodiments of the present disclosure. The chip may implement a corresponding process implemented by the terminal device in each method of the embodiments of the disclosure, which will not be elaborated herein for brief description.

It is to be understood that in the embodiments of the disclosure, the chip may also be referred to as a system level chip, a system chip, a chip system or a system-on-chip.

The processor mentioned above may be a universal processor, a Digital Signal Processor (DSP), a Field Programmable Gate Array (FPGA), an Application Specific Integrated Circuit (ASIC), or another programmable logical device, transistor logical device or discrete hardware component. The universal processor mentioned above may be a microprocessor or any conventional processors and the like.

The memory mentioned above may be a volatile memory or a non-volatile memory, or may include the volatile memory and the non-volatile memory. The non-volatile memory may be a Read-Only Memory (ROM), a Programmable ROM (PROM), an Erasable PROM (EPROM), an electrically EPROM (EEPROM) or flash memory. The volatile memory may be a random access memory (RAM).

It is to be understood that the above memory is exemplarily but unlimitedly described. For example, the memory in the embodiments of the disclosure may also be a static RAM (SRAM), a dynamic RAM (DRAM), an synchronous DRAM (SDRAM), a double data rate SDRAM (DDR SDRAM), an enhanced SDRAM (ESDRAM), a synch link DRAM (SLDRAM) and a Direct Rambus RAM (DR RAM). That is, the memory in the embodiments of the disclosure is intended to include but not limited to memories of these and any other suitable type.

The above embodiments may be implemented in whole or in part by software, hardware, firmware or any combination thereof. When implemented by software, the above embodiments may be implemented in the form of a computer program product in whole or in part. The computer program product includes one or more computer instructions. When the one or more computer program instructions are loaded and executed on a computer, the flows or functions described in accordance with the embodiments of the present disclosure are generated in whole or in part. The computer may be a universal computer, a dedicated computer, a computer network, or other programmable device. The computer instructions may be stored in a computer readable storage medium, or transmitted from one computer readable storage medium to another computer readable storage medium. For example, the computer instructions may be transmitted from one Web site, computer, server, or data center to another Web site, computer, server, or data center via wired (e.g., a coaxial cable, optical fiber, Digital Subscriber Line (DSL)) or wireless (e.g., infrared, wireless, microwave and so on). The computer readable storage medium may be any available medium that may be accessed by a computer, or data storage devices such as a server or a data center which are integrated with one or more available media. The available media may be magnetic media (e.g., a floppy disk, hard disk, magnetic tape), an optical media (e.g., DVD), or a semiconductor media (e.g., Solid State Disk (SSD)) and the like.

It is to be understood that, in various embodiments of the present disclosure, a magnitude of a sequence number of each process does not mean an execution sequence, and the execution sequence of each process should be determined by its function and an internal logic and should not form any limit to an implementation process of the embodiments of the disclosure.

Those skilled in the art may clearly learn about that specific working processes of the system, device and unit described above may refer to the corresponding processes in the method embodiments and will not be elaborated herein for convenient and brief description.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

**Claims**

1. A method for determining a panel used for transmission, comprising:

    determining, by a terminal device according to at least one of spatial information of an uplink channel, a redundancy version of the uplink channel or a predefined panel mapping rule, a panel used for each retransmission in multiple retransmissions of the uplink channel, at least two retransmissions in the multiple retransmissions using different panels; and
    performing, by the terminal device, the multiple retransmissions of the uplink channel over the determined panels.

**2.** The method of claim 1, wherein determining, by the terminal device according to the spatial information of the uplink channel, the panel used for each retransmission comprises:
determining, by the terminal device according to at least one of a panel identifier or sounding reference signal, SRS, resource set indication information in the spatial information of the uplink channel, the panel used for each retransmission.

**3.** The method of claim 2, wherein the spatial information of the uplink channel comprises a plurality of spatial information; and the method further comprises:
determining, by the terminal device according to at least one of a panel identifier or SRS resource set indication information in first spatial information corresponding to each retransmission, the panel used for the retransmission, wherein the first spatial information is one of the multiple spatial information.

**4.** The method of claim 2 or 3, wherein determining, by the terminal device according to the SRS resource set indication information in the spatial information of the uplink channel, the panel used for each retransmission comprises:
determining, by the terminal device for each retransmission, a panel used for a first SRS resource set as the panel used for the retransmission, the first SRS resource set being an SRS resource set indicated by SRS resource set indication information in spatial information corresponding to the retransmission.

**5.** The method of claim 1, wherein determining, by the terminal device according to the spatial information of the uplink channel, the panel used for each retransmission comprises:
determining, by the terminal device according to a spatial information group including the spatial information of the uplink channel, the panel used for each retransmission.

**6.** The method of claim 5, wherein the spatial information of the uplink channel comprises a plurality of spatial information; and the method further comprises:
determining, by the terminal device according to a spatial information group including first spatial information corresponding to each retransmission, the panel used for the retransmission, wherein the first spatial information is one of the multiple spatial information.

**7.** The method of claim 5 or 6, further comprising:

receiving, by the terminal device, multiple preset spatial information groups, each of the spatial information groups being used for indicating spatial information of the uplink channel on a panel;
wherein determining, by the terminal device according to the spatial information group including the spatial information of the uplink channel, the panel used for each retransmission comprises:
determining, by the terminal device, a panel corresponding to the spatial information group including the spatial information of the uplink channel as the panel used for the retransmission.

**8.** The method of claim 6 or 7, wherein the plurality of spatial information comprises spatial information belonging to different spatial information groups.

**9.** The method of claim 6, further comprising:

receiving, by the terminal device, each spatial information group index of the spatial information of the uplink channel, each spatial information group index corresponding to one panel;
wherein determining, by the terminal device according to the spatial information group including the spatial information of the uplink channel, the panel used for each retransmission comprises: determining, by the terminal device according to a group index of the spatial information corresponding to each retransmission, the panel used for the retransmission.

**10.** The method of claim 1, wherein determining, by the terminal device according to the spatial information of the uplink channel, the panel used for each retransmission comprises:
determining, by the terminal device according to a number of the spatial information of the uplink channel, the panel used for each retransmission.

**11.** The method of claim 10, wherein in a case where the number of the spatial information of the uplink channel is N, the terminal device determines to perform each retransmission of the uplink channel on N panels respectively, N being a positive integer.

**12.** The method of any one of claims 1 to 11, wherein the spatial information of the uplink channel comprises information for determining a transmission beam of the uplink channel.

**13.** The method of any one of claims 1 to 12, wherein the spatial information of the uplink channel comprises at least one of:

a transmission configuration indication, TCI, state;
spatial relation information; or
SRS resource indicator, SRI, indication information.

**14.** The method of any one of claims 1 to 13, wherein the spatial information of the uplink channel is indicated by scheduling downlink control information, DCI, of the uplink channel and/or indicated by high layer signaling.

**15.** The method of claim 1, wherein determining, by the terminal device according to the redundancy version of the uplink channel, the panel used for each retransmission comprises:
determining, by the terminal device, to perform retransmissions corresponding to a same group of redundancy versions by using a same panel, and perform retransmissions corresponding to different groups of redundancy versions by using different panels.

**16.** The method of claim 1, wherein determining, by the terminal device according to the panel mapping rule, the panel used for each retransmission comprises:

determining, by the terminal device, to perform an m-th retransmission of the uplink channel by using a k-th panel of the terminal device;
where

$$k=[(m-1)\bmod K]+1;$$

or

$$k=[(\lceil m/K\rceil-1)\bmod K]+1;$$

wherein K is a number of panels configured and/or activated by the terminal device, and k and m are positive integers.

**17.** The method of any one of claims 1 to 16, wherein the multiple retransmissions of the uplink channel occupy different slots or different orthogonal frequency division multiplexing, OFDM, symbols.

**18.** The method of any one of claims 1 to 17, wherein the uplink channel comprises a physical uplink shared channel, PUSCH, or a physical uplink control channel, PUCCH.

**19.** A terminal device, comprising:

a determination module, configured to determine, according to at least one of spatial information of an uplink channel, a redundancy version of the uplink channel or a predefined panel mapping rule, a panel used for each retransmission in multiple retransmissions of the uplink channel, at least two retransmissions in the multiple retransmissions using different panels; and
a transmission module, configured to perform the multiple retransmissions of the uplink channel over the determined panels.

**20.** The terminal device of claim 19, wherein the determination module is configured to determine, according to at least one of a panel identifier or sounding reference signal, SRS, resource set indication information in the spatial information of the uplink channel, the panel used for each retransmission.

**21.** The terminal device of claim 20, wherein the spatial information of the uplink channel comprises a plurality of spatial information; and
the determination module is configured to determine, according to at least one of a panel identifier or SRS resource set indication information in first spatial information corresponding to each retransmission, the panel used for the retransmission, wherein the first spatial information is one of the multiple spatial information.

22. The terminal device of claim 20 or 21, wherein the determination module is configured to, for each retransmission, determine a panel used for a first SRS resource set as the panel used for the retransmission, the first SRS resource set being an SRS resource set indicated by SRS resource set indication information in spatial information corresponding to the retransmission.

23. The terminal device of claim 19, wherein the determination module is configured to determine, according to a spatial information group including the spatial information of the uplink channel, the panel used for each retransmission.

24. The terminal device of claim 23, wherein the spatial information of the uplink channel comprises a plurality of spatial information; and
the determination module is configured to determine, according to a spatial information group including first spatial information corresponding to each retransmission, the panel used for the retransmission, wherein the first spatial information is one of the multiple spatial information.

25. The terminal device of claim 23 or 24, further comprising:

a first receiving module, configured to receive multiple preset spatial information groups, each of the spatial information groups being used for indicating spatial information of the uplink channel on a panel; and
wherein the determination module is configured to determine a panel corresponding to the spatial information group including the spatial information of the uplink channel as the panel used for the retransmission.

26. The terminal device of claim 24 or 25, wherein the plurality of spatial information comprises spatial information belonging to different spatial information groups.

27. The terminal device of claim 24, further comprising:

a second receiving module, configured to receive each spatial information group index of the spatial information of the uplink channel, each spatial information group index corresponding to one panel; and
wherein the determination module is configured to determine, according to a group index of the spatial information corresponding to each retransmission, the panel used for the retransmission.

28. The terminal device of claim 19, wherein the determination module is configured to determine the panel used for each retransmission according to a number of the spatial information of the uplink channel.

29. The terminal device of claim 28, wherein in a case where the number of the spatial information of the uplink channel is N, the determination module is configured to determine to perform each retransmission of the uplink channel on N panels respectively, N being a positive integer.

30. The terminal device of any one of claims 19 to 29, wherein the spatial information of the uplink channel comprises information for determining a transmission beam of the uplink channel.

31. The terminal device of any one of claims 19 to 30, wherein the spatial information of the uplink channel comprises at least one of:

a transmission configuration indication, TCI, state;
spatial relation information; or
SRS resource indicator, SRI, indication information.

32. The terminal device of any one of claims 19 to 31, wherein the spatial information of the uplink channel is indicated by scheduling downlink control information, DCI, of the uplink channel and/or indicated by high layer signaling.

33. The terminal device of claim 19, wherein the determination module is configured to determine to perform retransmissions corresponding to a same group of redundancy versions by using a same panel, and perform retransmissions corresponding to different groups of redundancy versions by using different panels.

34. The terminal device of claim 19, wherein the determination module is configured to determine to perform an m-th retransmission of the uplink channel by using a k-th panel of the terminal device;
where

$$k=[(m-1)\bmod K]+1;$$

or

$$k=[(\lceil m/K\rceil-1)\bmod K]+1;$$

wherein K is a number of panels configured and/or activated by the terminal device, and k and m are positive integers.

35. The terminal device of any one of claims 19 to 34, wherein the multiple retransmissions of the uplink channel occupy different slots or different orthogonal frequency division multiplexing, OFDM, symbols.

36. The terminal device of any one of claims 19 to 35, wherein the uplink channel comprises a physical uplink shared channel, PUSCH, or a physical uplink control channel, PUCCH.

37. A terminal device, comprising: a processor and a memory, wherein the memory is configured to store a computer program, and the processor is configured to call and run the computer program stored in the memory to execute the method of any one of claims 1 to 18.

38. A chip, comprising: a processor, configured to call a computer program from a memory and run the computer program, to cause a device mounted with the chip to execute the method of any one of claims 1 to 18.

39. A computer readable storage medium, configured to store a computer program that causes a computer to execute the method of any one of claims 1 to 18.

40. A computer program product, comprising one or more computer program instructions that cause a computer to execute the method of any one of claims 1 to 18.

41. A computer program, causing a computer to execute the method of any one of claims 1 to 18.

**100**

110

120    120

**FIG. 1**

| A terminal device determines, according to at least one of spatial information of an uplink channel, a redundancy version of the uplink channel or a predefined panel mapping rule, a panel used for each repetition transmission in multiple repetition transmissions of the uplink channel, and at least two repetition transmissions in the multiple repetition transmissions use different panels | S210 |

| The terminal device performs the multiple repetition transmissions of the uplink channel over the determined panels | S220 |

**FIG. 2**

Panel 0     Panel 1     Panel 0     Panel 1

⇑       ⇑       ⇑       ⇑

Panel ID=0   Panel ID=1   Panel ID=0   Panel ID=1

⇑       ⇑       ⇑       ⇑

| ←—Slot—→ | TCI state 0 | TCI state 1 | TCI state 0 | TCI state 1 |
|----------|-------------|-------------|-------------|-------------|
| PDCCH | PUSCH | PUSCH | PUSCH | PUSCH |

TCI state 0 and TCI state 1 are indicated in DCI

**FIG. 3**

Panel 0                 Panel 1

⇑                    ⇑

| SRS resource set 0 | | SRS resource set 1 | |
|---|---|---|---|

⇑     ⇑       ⇑     ⇑

| ←—Slot—→ | TCI state 0 | TCI state 0 | TCI state 1 | TCI state 1 |
|----------|-------------|-------------|-------------|-------------|
| PDCCH | PUSCH | PUSCH | PUSCH | PUSCH |

TCI state 0 and TCI state 1 are indicated in DCI

**FIG. 4**

TCI state group 0

| TCI state 0 |
| TCI state 1 |
| TCI state 2 |
| TCI state 3 |

TCI state group 1

| TCI state 4 |
| TCI state 5 |
| TCI state 6 |
| TCI state 7 |

Panel 0          Panel 1

⇧               ⇧

| TCI state group index=0 | | TCI state group index=1 |

⇧          ⇧          ⇧          ⇧

TCI state 0   TCI state 0   TCI state 5   TCI state 5

| PDCCH | PUSCH | PUSCH | PUSCH | PUSCH |

TCI state 0 and TCI state 5 are indicated in DCI

←————————————————Slot————————————————→

**FIG. 5**

←—Slot—→

| PUCCH | PUCCH | PUCCH | PUCCH | PUCCH | PUCCH | PUCCH | PUCCH |

Panel 0      Panel 1      Panel 3      Panel 4      Panel 0      Panel 1      Panel 3      Panel 4

**FIG. 6**

←—Slot—→

| PUCCH | PUCCH | PUCCH | PUCCH | PUCCH | PUCCH | PUCCH | PUCCH |

Panel 0      Panel 0      Panel 1      Panel 1      Panel 0      Panel 0      Panel 1      Panel 1

**FIG. 7**

17

Terminal device 800

Determination
module                    810

Transmission
module                    820

**FIG. 8**

Terminal device 900

930                              940

First receiving          Second receiving
module                   module

Determination            810
module

Transmission            820
module

**FIG. 9**

Communication device 1000

Memory
1020

Processor
1010

Transceiver
1030

**FIG. 10**

Chip 1100

Input
interface
1130

Processor
1110

Memory
1120

Output
interface
1140

**FIG. 11**

## INTERNATIONAL SEARCH REPORT

| International application No. |
|---|
| **PCT/CN2020/108005** |

**A.    CLASSIFICATION OF SUBJECT MATTER**

H04L 5/00(2006.01)i

According to International Patent Classification (IPC) or to both national classification and IPC

**B.    FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; CNKI; VEN; EPTXT; USTXT; WOTXT: 天线面板, 天线集合, 重新传输, 重复传输, 重新发送, 空间信息, 冗余版本, 映射, TCI, 上行, PUCCH, PUSCH, antenna panels, NR, 5G, space, set, new radio, ID, relation, differ, redundancy version, repeat, second, transmit, uplink, repetition

**C.    DOCUMENTS CONSIDERED TO BE RELEVANT**

| Category* | Citation of document, with indication, where appropriate, of the relevant passages | Relevant to claim No. |
|---|---|---|
| X | CN 111294177 A (SPREADTRUM COMMUNICATIONS SHANGHAI INC.) 16 June 2020 (2020-06-16)<br>        description paragraphs [0063]-[0073], [0100]-[0314], figures 1-8 | 1-41 |
| X | CN 111448840 A (BEIJING XIAOMI MOBILE SOFTWARE CO., LTD.) 24 July 2020 (2020-07-24)<br>        description, paragraphs [0042]-[0159], and figures 1-8 | 1-41 |
| X | US 2020205150 A1 (FG INNOVATION CO., LTD.) 25 June 2020 (2020-06-25)<br>        description, paragraphs [0034]-[0140], and figures 1-6 | 1-41 |
| A | CN 109983823 A (BEIJING XIAOMI MOBILE SOFTWARE CO., LTD.) 05 July 2019 (2019-07-05)<br>        entire document | 1-41 |
| A | CN 111132322 A (BEIJING SPREADTRUM HIGH-TECH COMMUNICATIONS TECHNOLOGY CO., LTD.) 08 May 2020 (2020-05-08)<br>        entire document | 1-41 |
| A | CN 110972288 A (HUAWEI TECHNOLOGIES CO., LTD.) 07 April 2020 (2020-04-07)<br>        entire document | 1-41 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 March 2021** | **06 May 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2020/108005** |

**C. DOCUMENTS CONSIDERED TO BE RELEVANT**

| Category* | Citation of document, with indication, where appropriate, of the relevant passages | Relevant to claim No. |
| --- | --- | --- |
| A | US 2020177256 A1 (LG ELECTRONICS INC.) 04 June 2020 (2020-06-04)<br>entire document | 1-41 |

Form PCT/ISA/210 (second sheet) (January 2015)

**INTERNATIONAL SEARCH REPORT**
Information on patent family members

International application No.

**PCT/CN2020/108005**

| Patent document cited in search report | | | Publication date (day/month/year) | Patent family member(s) | | | Publication date (day/month/year) |
|---|---|---|---|---|---|---|---|
| CN | 111294177 | A | 16 June 2020 | None | | | |
| CN | 111448840 | A | 24 July 2020 | None | | | |
| US | 2020205150 | A1 | 25 June 2020 | None | | | |
| CN | 109983823 | A | 05 July 2019 | WO | 2020168551 | A1 | 27 August 2020 |
| CN | 111132322 | A | 08 May 2020 | WO | 2020088225 | A1 | 07 May 2020 |
| CN | 110972288 | A | 07 April 2020 | EP | 3657880 | A1 | 27 May 2020 |
| | | | | CN | 110417525 | A | 05 November 2019 |
| | | | | EP | 3657880 | A4 | 27 May 2020 |
| | | | | WO | 2020062971 | A1 | 02 April 2020 |
| | | | | CN | 110224802 | A | 10 September 2019 |
| US | 2020177256 | A1 | 04 June 2020 | WO | 2018231009 | A1 | 20 December 2018 |

Form PCT/ISA/210 (patent family annex) (January 2015)